# FASCICULE DE BREVET EUROPEEN

(11) **EP 2 530 586 B1**
(45) Date de publication et mention de la délivrance du brevet: **20.12.2017**
(21) Numéro de dépôt: 12170315.1
(22) Date de dépôt: 31.05.2012
(51) Int. Cl.: G06F 9/445, G06F 9/45, G06F 11/14

(54) **Procédé de génération d'un logiciel**
Verfahren zur Erzeugung einer Software
Method for generating software

(30) Priorité: 31.05.2011 FR 1154772
(43) Date de publication de la demande: 05.12.2012
(73) Titulaire: Myriad Group AG, 8001 Zürich (CH)
(72) Inventeur: Coupvent des Graviers, Marc-Emmanuel, 75017 Paris (FR)
(74) Mandataire: D Young & Co LLP

(56) Documents cités:
- DE-A1-102006 039 418
- US-A1- 2006 074 931
- US-A1- 2010 229 163
- Metrowerk, Freescale Semiconductor company: "CodeWarrior Development Studio for ColdFire Architectures v6.0, Targeting Manual", User Guide , 30 juin 2005 (2005-06-30), pages 1-10,67-71,77-104, XP002665144, Extrait de l'Internet: URL:http://cache.freescale.com/files/soft_ dev_tools/doc/user_guide/COLDFIREUG.pdf [extrait le 2011-12-05]

## Description

La présente invention concerne un procédé de génération d'un logiciel. Les systèmes d'exploitation utilisés dans les terminaux mobiles, comme par exemple les téléphones mobiles, comprenant une mémoire physique sont classés en deux catégories. La première catégorie, correspondant à des systèmes d'exploitation simples, est généralement désignée par « RTOS », acronyme des termes anglais « Real Time Operating System », la seconde catégorie, correspondant à des systèmes d'exploitation complets, étant généralement désignée par « OS complet ».

Une différence entre ces deux catégories réside dans le fait que les systèmes d'exploitation complets disposent d'une mémoire virtuelle, contrairement aux systèmes d'exploitation simples. Cette mémoire virtuelle permet une isolation de composants logiciels, utilisés par une application donnée, et une initialisation de la mémoire utilisée par les composants logiciels à chaque fois que l'application est (re)démarrée.

L'intégration d'un logiciel, comprenant plusieurs composants logiciels, dans le terminal s'effectue grâce à l'utilisation de la mémoire physique du terminal. De manière classique, la mémoire physique comprend une mémoire vive ou RAM, de l'anglais « Random Access Memory », propre à contenir un segment de stockage de données (BSS) et un segment de données (data), et une mémoire morte ou ROM, « Read-Only Memory » selon la terminologie anglo-saxonne, propre à contenir au moins un segment d'initialisation de données.

En particulier, l'intégration comprend une phase de génération du logiciel, à partir de fichiers sources, associés aux composants logiciels, comportant des variables initialisées à des valeurs spécifiques et des variables initialisées à zéro, le logiciel étant propre à être exécuté par le terminal. Les variables initialisées à des valeurs spécifiques correspondent à des variables utilisées par un développeur du composant logiciel concerné et dont il a fixé le contenu à une valeur spécifique lors du développement. Les variables initialisées à zéro correspondent à des variables dont le contenu n'a pas été fixé par le développeur. Pour ces variables, c'est le système d'exploitation qui fixe leur contenu à zéro.

De manière connue, la phase de génération utilise un procédé de génération comprenant une étape de compilation du logiciel, propre à allouer pour chaque composant logiciel les variables initialisées à zéro dans le segment de stockage de données et les variables initialisées à des valeurs spécifiques dans le segment de données. Cette étape de compilation est propre, également, à transformer les fichiers sources en fichiers objets.

Le procédé de génération comprend également une étape d'édition de liens, propre à regrouper les variables initialisées à zéro et celles initialisées à des valeurs spécifiques au sein de leur segment respectif alloué, et à regrouper les fichiers objets afin de constituer un fichier exécutable correspondant au logiciel.

Après application du procédé, le segment de stockage de données comprend l'ensemble des variables initialisées à zéro associées à chaque composant de façon regroupée et le segment de données comprend l'ensemble des variables initialisées à des valeurs spécifiques associées à chaque composant de façon regroupée.

Ainsi, pour un composant logiciel donné, les variables initialisées à zéro et celles initialisées à des valeurs spécifiques occupent, respectivement, une partie du segment de stockage de données et une partie du segment de données.

Lors de son fonctionnement, le terminal est propre à exécuter des applications utilisant un ou plusieurs composants logiciels.

Dans le cas d'un redémarrage d'une application, il est nécessaire de redémarrer le ou les composants logiciels utilisés par l'application.

Or, pour les systèmes d'exploitation simples, c'est-à-dire pour des systèmes d'exploitation sans mémoire virtuelle, le redémarrage s'effectue par une réinitialisation du segment de stockage de données et du segment de données.

Le problème est que cette réinitialisation entraîne une réinitialisation de l'ensemble des composants logiciels en mémoire du terminal, provoquant un redémarrage du terminal pendant une période donné et donc une indisponibilité complète du terminal durant toute cette période.

On connaît le procédé décrit dans le document US 2010/229163, dans lequel les segments concernés sont déplacés dans un segment global, avec modification des fichiers d'origine, dans le but de permettre à un composant logiciel de contrôler l'initialisation ou la réinitialisation de ses propres variables notamment pour mieux gérer la libération de la mémoire.

Toutefois, même avec un tel procédé, lorsqu'un composant logiciel doit être redémarré, il peut être nécessaire de rédémarrer complètement le terminal. Aussi, la disponibilité des services offerts par le terminal s'en trouve réduite, en particulier dans le cas de l'utilisation d'un système d'exploitation simple sans mémoire virtuelle.

Le but de l'invention est donc de proposer un procédé de génération d'un logiciel permettant un redémarrage spécifique d'un composant logiciel afin d'éviter un redémarrage global du terminal lors de son fonctionnement. La présente invention concerne un procédé de génération d'un logiciel tel que défini dans la revendication 1. A cet effet, l'invention a pour objet un procédé de génération d'un logiciel du type précité, caractérisé en ce qu'il comporte, en outre, pour au moins un composant logiciel propre à un redémarrage :
- une étape de compilation, utilisant un compilateur propre à allouer, pour chaque fichier source, les variables initialisées à zéro à un segment de stockage de données, les variables initialisées a un segment de données, et les valeurs spécifiques des variables initialisées a un segment d'initialisation de données, et à transformer les fichiers sources en fichiers objets, et
- une étape de configuration de l'éditeur de liens en utilisant des directives d'édition de lien, afin de réaliser une étape d'édition de liens spécifique qui alloue de façon contigüe les segments renommes de stockage de données, de données, et d'initialisation de données pour chaque fichier objet du composant logiciel à redémarrer dans des zones spécifiques au composant logiciel à redémarrer et nommées d'après le composant logiciel à redémarrer, respectivement en mémoire vive pour les segments renommés de stockage de données et de données et en mémoire morte pour les segments renommés d'initialisation de données.

Suivant d'autres modes de réalisation, le procédé de génération comprend une ou plusieurs des caractéristiques suivantes, prises isolément ou suivant toutes les combinaisons techniquement possibles :
- les variables initialisées à zéro sont des variables ayant une valeur fixée par le système d'exploitation, et les variables initialisées à des valeurs spécifiques sont des variables dont les valeurs spécifiques ont été fixées préalablement par un développeur ;
- l'étape d'édition de liens spécifique comprend les étapes suivantes :
   - une étape propre à attribuer une zone spécifique de la mémoire, différente de la zone prédéterminée, pour le segment renommé de stockage de données, le segment renommé de données et le segment renommé d'initialisation de données, et
   - une étape propre à créer des repères en début et en fin de chaque segment renommé, destinée à indiquer l'emplacement dans la mémoire des variables à initialiser lors d'un redémarrage du composant logiciel propre à un redémarrage ;
- le composant logiciel est une bibliothèque logicielle ;
- le compilateur est de type C/C++ ;
- le terminal est un téléphone mobile.

L'invention a également pour objet un terminal propre à exécuter un logiciel, caractérisé en ce que le logiciel est généré suivant le procédé tel que défini ci-dessus.

L'invention a également pour objet un produit programme d'ordinateur comportant des instructions qui, lorsque mises en oeuvre par une unité centrale de traitement intégrée à un terminal, met en oeuvre le procédé tel que défini ci-dessus.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'un terminal comprenant un logiciel généré par le procédé selon l'invention,
- la figure 2 est une représentation schématique d'une mémoire d'un terminal, et
- la figure 3 est un organigramme du procédé de génération d'un logiciel selon l'invention.

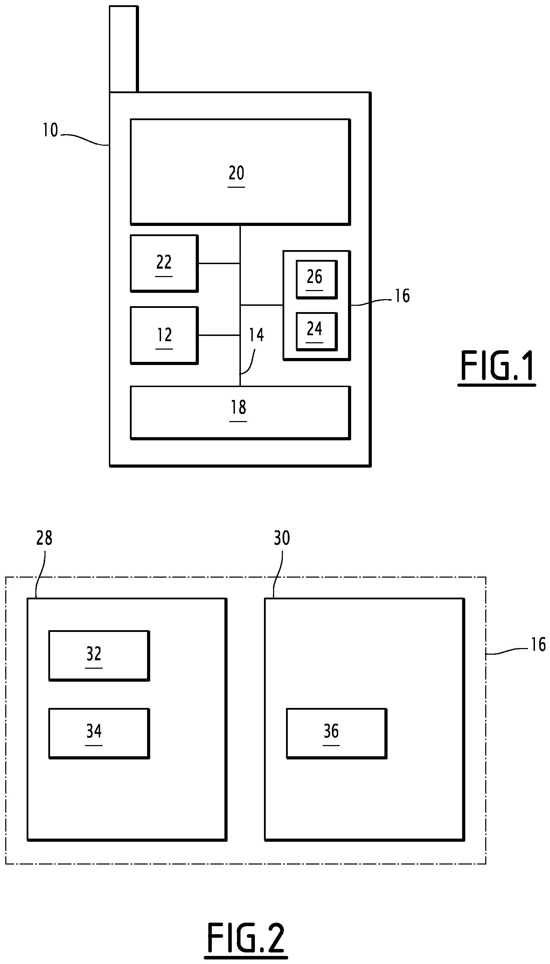

On observe, en figure 1, un terminal 10, comme par exemple un téléphone portable, propre à interagir avec un réseau de téléphonie mobile afin d'établir une communication avec un utilisateur ou un terminal distant.

Plus précisément, le terminal 10 comprend différents composants électroniques nécessaires à son fonctionnement, comme par exemple une unité centrale de traitement 12, reliée à un bus de données 14, permettant l'échange d'informations avec l'ensemble des autres composants du terminal 10, comme une ou plusieurs mémoires 16, une interface utilisateur 18, et un écran d'affichage 20.

Le terminal 10 comprend également des moyens de communication 22 permettant l'échange de données avec le réseau de téléphonie mobile.

La mémoire 16 comprend un logiciel 24, comportant des composants logiciels ou applications, et un système d'exploitation 26, dans le cas considéré ici, sans mécanisme de recours à une mémoire virtuelle, propre à être exécuté par l'unité centrale de traitement 12.

L'unité centrale 12 est propre à exécuter les applications contenues en mémoire 16, à l'aide du système d'exploitation 26, permettant ainsi le fonctionnement classique d'un terminal 10.

L'interface utilisateur 18 permet à un utilisateur d'interagir avec le terminal 10 et, plus particulièrement, avec les différentes applications exécutées sur le terminal 10, comme par exemple avec un composant logiciel lorsque celui-ci est exécuté par l'unité centrale 12. Par exemple, dans le cas d'une utilisation d'un navigateur Internet, le composant logiciel est « Webkit ».

L'écran d'affichage 20 est propre à fournir à l'utilisateur une visualisation de différentes informations issues des applications exécutées par l'unité centrale 12.

La structure de la mémoire 16 va être à présent détaillée de manière plus précise à l'aide de la figure 2.

La mémoire 16 comprend différentes zones de mémoire, allouées statiquement ou dynamiquement, en fonction du logiciel global 24 et des applications exécutées sur le terminal 10.

Plus précisément, la mémoire 16 comprend une mémoire vive 28, et une mémoire morte 30.

La mémoire vive 28 et la mémoire morte 30 sont découpées en zones de mémoire.

La mémoire vive 28 comprend un segment de stockage de données 32, plus communément connu sous l'appellation « BSS », destiné au stockage de variables initialisées à zéro. La mémoire vive 28 comprend également un segment de données 34, plus communément connu sous l'appellation « Data », destiné au stockage de variables initialisées à des valeurs spécifiques.

La mémoire morte 30 comprend un segment d'initialisation de données 36, plus communément connu sous l'appellation « Data_init », destiné au stockage des valeurs spécifiques des variables initialisées à des valeurs spécifiques.

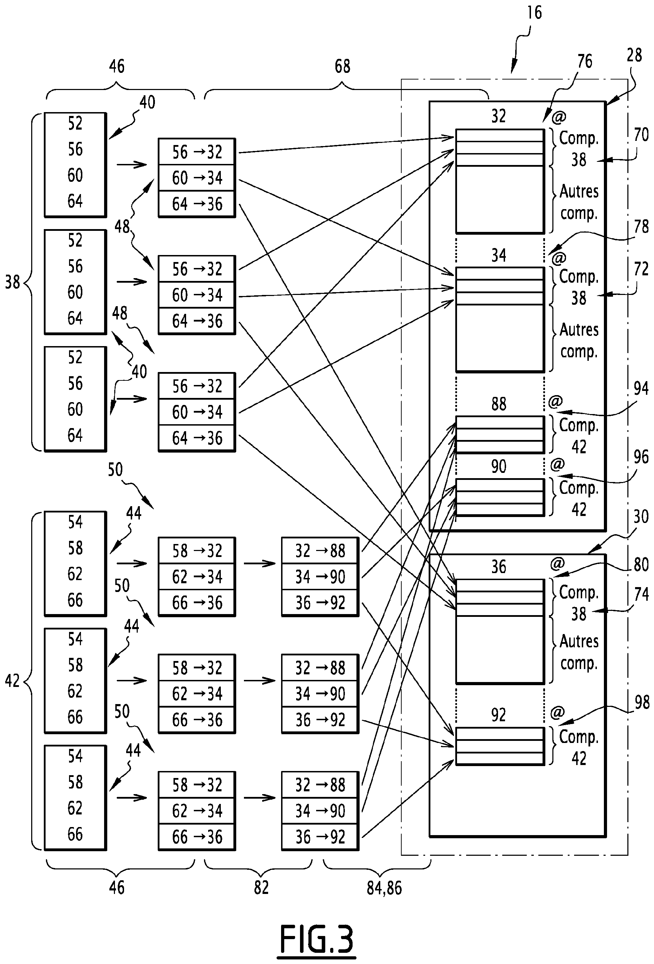

Le procédé de génération du logiciel 24 va être à présent décrit au regard de la figure 3.

Le logiciel 24 comprend des composants logiciels 38, 42 de deux catégories différentes. Un composant logiciel 38, d'une première catégorie, représenté par un ensemble de fichiers sources 40 associés, correspond à un composant logiciel qui ne demande pas de redémarrage spécifique lors du fonctionnement du terminal 10. Au contraire, un composant logiciel 42, d'une seconde catégorie, représenté par un ensemble de fichiers sources 44 associés, correspond à un composant logiciel qui demande un redémarrage spécifique lors du fonctionnement du terminal 10.

Chaque fichier source, respectivement 40, 44 comprend du code en langage de haut niveau, par exemple en langage C, et des variables, certaines variables étant initialisées à zéro et d'autres étant initialisées à des valeurs spécifiques.

Pour les deux catégories de composants logiciels, respectivement 38, 42, une étape de compilation 46 est propre à transformer respectivement chaque fichier source, respectivement 40, 44 en un fichier objet, respectivement 48, 50.

Plus précisément, de manière classique, un compilateur est propre à allouer, pour chaque fichier source, respectivement 40, 44, le code, respectivement 52, 54 à un segment de code, non représenté, les variables initialisées à zéro, respectivement 56, 58 au segment de stockage de données 32, les variables initialisées à des valeurs spécifiques, respectivement 60, 62 au segment de données 34 et les valeurs spécifiques, respectivement 64, 66 des variables initialisées au segment d'initialisation de données 36.

Ensuite, une étape de d'édition de liens 68 est propre à regrouper l'ensemble des fichiers objet, respectivement 48, 50 en un fichier exécutable, correspondant au logiciel 24, à charger en mémoire 16 et à exécuter sur le terminal 10.

Plus précisément, de manière connue, pour le composant logiciel 38, un éditeur de liens regroupe l'ensemble des variables initialisées à zéro 56 dans un bloc 70 au sein du segment de stockage de données 32, l'ensemble des variables initialisées à des valeurs spécifiques 60 dans un bloc 72 au sein du segment de données 34 et l'ensemble des valeurs spécifiques 64 dans un bloc 74 au sein du segment d'initialisation de données 36.

Ensuite, l'éditeur de liens attribue une zone prédéterminée de la mémoire 16, par défaut, à chaque bloc, respectivement 70, 72, 74.

Plus précisément, une zone prédéterminée 76 est attribuée au sein du segment de stockage de données 32 de la mémoire vive 28 pour le bloc 70 regroupant l'ensemble des variables initialisées à zéro 56 du composant 38. De la même manière, une zone prédéterminée 78 est attribuée au sein du segment de données 34 de la mémoire vive 28 pour le bloc 72 regroupant l'ensemble des variables initialisées à des valeurs spécifiques 60 du composant 38.

Enfin, une zone prédéterminée 80 est attribuée au sein du segment d'initialisation de données 36 de la mémoire morte 30 pour le bloc 74 regroupant l'ensemble des valeurs spécifiques 64 des variables initialisées du composant 38.

De la même manière, dans le cas où le logiciel 24 comprend d'autres composants logiciels de type 38, c'est-à-dire de première catégorie ne demandant pas de redémarrage spécifique, les étapes de compilation 46 et d'édition de liens 68 permettent l'obtention de manière groupée d'un ensemble de variables de type 56, 60 et de valeurs spécifiques de type 64 associés aux composants logiciels de type 38 au sein d'un même segment, respectivement 32, 34, 36, comme représenté sur la figure 3. Ainsi, comme le système d'exploitation 26 gère tout redémarrage d'un composant logiciel de type 38 au niveau de ses segments associés, respectivement 32, 34, 36, en cas de redémarrage du composant logiciel 38 ou de l'un quelconque des autres composants logiciels de type 38, c'est l'ensemble des composants logiciels qui sont impactés et qui vont redémarrer.

Dans une étape de renommage 82, concernant le composant 42 suite à l'étape 46 de compilation, chaque segment alloué respectivement aux variables initialisées à zéro 58, aux variables initialisées à des valeurs spécifiques 62 et aux valeurs spécifiques 66 est renommé.

De manière plus précise, l'ensemble des fichiers objets 50 est édité de manière à modifier le nom du segment de stockage de données 32 alloué aux variables initialisées à zéro 58. Par exemple, le nom « BSS » du segment initial de données 58 est renommé en « BSS_Comp._42». Suivant un principe identique, les noms du segment de données 34 alloué aux variables initialisées à des valeurs spécifiques 60 et du segment d'initialisation de données 36 alloué aux valeurs spécifiques 64 sont renommés.

Ainsi, cette étape de renommage 82 est propre à isoler les variables 58, 62 et les valeurs spécifiques 66 dans des segment spécifiques et uniques au composant logiciel 42, de manière à permettre un redémarrage spécifique du composant logiciel 42.

Suite à l'étape de renommage 82, une étape de configuration 84 de l'éditeur de liens est initiée afin de modifier le comportement par défaut de l'éditeur de liens et de réaliser une étape d'édition de liens spécifique 86 pour le composant logiciel 42.

La configuration de l'éditeur de liens consiste à lui indiquer que des segments renommés de stockage de données, de données, et d'initialisation de données pour tous les fichiers objets 50 issus de la compilation des fichiers sources 44, doivent être alloués dans des zones spécifiques au composant logiciel 42, nommées d'après le composant logiciel 42, respectivement en mémoire vive 28 pour les segments renommés de stockage de données et de données et en mémoire morte 30 pour les segments renommés d'initialisation de données et ce de façon contigüe en utilisant les directives d'édition de lien prévues à cet effet.

Ainsi, lors de l'étape d'édition de liens spécifique 86, l'éditeur de liens regroupe de manière contigüe l'ensemble des variables initialisées à zéro 58 dans un segment renommé de stockage de données 88.

Suivant le même principe, l'ensemble des variables initialisées à des valeurs spécifiques 62 est regroupé de manière contigüe dans un segment renommé de données 90 et l'ensemble des valeurs spécifiques 66 est regroupé de manière contigüe dans un segment renommé d'initialisation de données 92.

Ensuite, l'éditeur de liens attribue une zone spécifique de la mémoire 16, différente de la zone prédéterminée qui est celle attribuée au composant 38 dans l'exemple considérée, pour chaque segment renommé 88, 90, 92.

De manière plus précise, une zone spécifique 94 est attribuée pour le segment renommé 88 de stockage de données regroupant l'ensemble des variables initialisées à zéro 58 du composant 42. Suivant un principe identique, une zone spécifique 96 est attribuée pour le segment renommé 90 de segment de données regroupant l'ensemble des variables initialisées à des valeurs spécifiques 62 du composant 42 et une zone spécifique 98 est attribuée pour le segment renommé 92 d'initialisation de données regroupant l'ensemble des valeurs spécifiques 66 des variables initialisées du composant 42.

De la même manière, dans le cas où le logiciel 24 comprend d'autres composants logiciels de type 42, c'est-à-dire de seconde catégorie demandant un redémarrage spécifique, les étapes de compilation 46, d'édition de liens 82 et de configuration 84 permettent l'obtention d'un ensemble des variables de type 58, 62 et de valeurs spécifiques de type 66 associés aux composants logiciels de type 42 au sein de segments renommés, respectivement 88, 90, 92, ces segments étant associés uniquement à leurs composants logiciels respectifs.

Enfin, l'étape spécifique d'édition de liens 86 comprend une étape de création de repères en début et en fin de chaque segment renommé 88, 90, 92. Cette étape est destinée à indiquer à un logiciel d'initialisation du matériel l'emplacement dans la mémoire 16 des variables 58, 62 à initialiser lors d'un redémarrage du composant logiciel 42 lors du fonctionnement du terminal.

Lors de cette étape de création de repères, l'éditeur de liens crée des variables avec un nom spécifique en début et en fin de chaque segment renommé 88, 90, 92 en une adresse donnée de la mémoire 16, permettant ainsi de créer des repères, ou marqueurs, pour tous les segments renommés 88, 90, 92.

Ainsi, lors du fonctionnement du terminal 10, en cas d'erreur de fonctionnement associé à un composant logiciel 42, due par exemple à un problème de débordement mémoire, le logiciel d'initialisation du matériel récupère les adresses des repères pour chaque segment renommé.

Ensuite, le logiciel d'initialisation du matériel procède à l'initialisation à zéro de l'ensemble des données du segment renommé 88 de stockage de données. Puis, le logiciel gère le repositionnement, ou la recopie, des données du segment renommé 92 d'initialisation de données dans le segment renommé de données 90.

Ainsi, comme l'ensemble des variables 58, 62 associées au composant logiciel 42 a été réinitialisée, le composant logiciel 42 est propre à un redémarrage de manière spécifique. Par conséquent, grâce au procédé de l'invention qui permet d'isoler les segments associés aux variables utilisées par un composant logiciel en particulier, le composant logiciel 42 est propre à un redémarrage indépendamment des autres composants logiciels 38 et du logiciel 24.

De ce fait, le procédé selon l'invention permet d'éviter un redémarrage complet de terminaux disposant de systèmes d'exploitation simple sans mémoire virtuelle dans le cas où un ou plusieurs composants logiciels spécifiques doivent être redémarrés. Par conséquent, l'impact d'un redémarrage d'un composant logiciel sur la disponibilité des services offerts par le terminal est considérablement amoindri.

On a considéré ici que le système d'exploitation ne disposait pas de recours à une mémoire virtuelle (système d'exploitation « simple »). Bien entendu, l'invention pourra être mise en oeuvre avec un système d'exploitation « complet ».

## Revendications

1. Procédé de génération d'un logiciel (24), comportant au moins deux composants logiciels (38, 42), à partir de fichiers sources (40, 44) associés aux composants logiciels (38, 42), les fichiers sources (40, 44) comprenant des variables initialisées à zéro (56, 58) et des variables initialisées (60, 62) à des valeurs spécifiques (64, 66), propre à être exécuté sur un terminal (10) comprenant un système d'exploitation (26) sans mémoire virtuelle et une mémoire physique (16), la mémoire physique (16) comprenant une mémoire vive (28), propre à contenir au moins un segment de stockage de données (32) et au moins un segment de données (34), et une mémoire morte (30), propre à contenir au moins un segment d'initialisation de données (36), le procédé comprenant, pour chaque composant logiciel (38, 42), dont l'un au moins est propre à un redémarrage spécifique lors d'une exécution du logiciel (24), les étapes suivantes :
- une étape de compilation (46), utilisant un compilateur propre à allouer, pour chaque fichier source (40, 44), les variables initialisées à zéro (56, 58) à un segment de stockage de données (32), les variables initialisées (60, 62) à un segment de données (34), et les valeurs spécifiques (64, 66) des variables initialisées à un segment d'initialisation de données (36), et à transformer les fichiers sources (40, 44) en fichiers objets (48, 50), et
- une étape d'édition de liens (68), utilisant un éditeur de liens propre à regrouper les variables initialisées à zéro (56), les variables initialisées (60) et leurs valeurs spécifiques (64) dans un bloc respectif (70, 72, 74) au sein de leur segment respectif (32, 34, 36) alloué lors de l'étape de compilation (46), propre à attribuer une zone prédéterminée (76, 78, 80) de la mémoire (16) pour chaque bloc (70, 72, 74) et propre à regrouper les fichiers objets (52) issus de l'étape de compilation (46), pour constituer un fichier exécutable correspondant au logiciel (24),
**caractérisé en ce qu'**il comporte, en outre, pour au moins un composant logiciel (42) propre à un redémarrage :
- une étape de renommage (82) du segment de stockage de données (32), du segment de données (34) et du segment d'initialisation de données (36), alloué lors de l'étape de compilation (46) et associés à chaque fichier objet (50) issus de cette étape de compilation (46), pour le composant logiciel (42) à redémarrer, et
- une étape de configuration (84) de l'éditeur de liens en utilisant des directives d'édition de lien, afin de réaliser une étape d'édition de liens spécifique (86) qui alloue de façon contigüe les segments renommes de stockage de données (32), de données (34), et d'initialisation de données (36) pour chaque fichier objet (50) du composant logiciel (42) à redémarrer dans des zones spécifiques au composant logiciel (42) à redémarrer et nommées d'après le composant logiciel (42) à redémarrer, respectivement en mémoire vive (28) pour les segments renommés de stockage de données (32) et de données (34) et en mémoire morte (30) pour les segments renommés d'initialisation de données (36).

2. Procédé selon la revendication 1, dans lequel les variables initialisées à zéro (56, 58) sont des variables ayant une valeur fixée par le système d'exploitation (26), et en ce que les variables initialisées (60, 62) à des valeurs spécifiques (64, 66) sont des variables dont les valeurs spécifiques ont été fixées préalablement par un développeur.

3. Procédé selon la revendication 1 ou 2, dans lequel l'étape d'édition de liens spécifique (86) comprend les étapes suivantes :
- une étape propre à attribuer une zone spécifique (94, 96, 98) de la mémoire (16), différente de la zone prédéterminée (76, 78, 80), pour le segment renommé de stockage de données (88), le segment renommé de données (90) et le segment renommé d'initialisation de données (92), et
- une étape propre à créer des repères en début et en fin de chaque segment renommé (88, 90, 92), destinée à indiquer l'emplacement dans la mémoire (16) des variables à initialiser (58, 62) lors d'un redémarrage du composant logiciel (42) propre à un redémarrage.

4. Procédé selon l'une quelconque des revendications précédentes, dans lequel le composant logiciel (42) est une bibliothèque logicielle.

5. Procédé selon l'une quelconque des revendications précédentes, dans lequel le compilateur est de type C/C++.

6. Procédé selon l'une quelconque des revendications précédentes, dans lequel le terminal (10) est un téléphone mobile.

7. Terminal (10) propre à exécuter un logiciel (24), dans lequel le logiciel (24) est généré suivant le procédé décrit selon l'une quelconque des revendications 1 à 5.

8. Produit programme d'ordinateur comportant des instructions qui, lorsque mises en oeuvre par une unité centrale de traitement (12) intégrée à un terminal (10), met en oeuvre le procédé selon l'une quelconque des revendications 1 à 6.

## Patentansprüche

1. Verfahren zur Erzeugung einer mindestens zwei Softwarekomponenten (38, 42) aufweisenden Software (24) ausgehend von den Softwarekomponenten (38, 42) zugeordneten Quelldateien (40, 44), wobei die Quelldateien (40, 44) mit Null initialisierte Variablen (56, 58) und mit spezifischen Werten (64, 66) initialisierte Variablen (60, 62) enthalten, das geeignet ist, auf einem Endgerät (10) ausgeführt zu werden, welches ein Betriebssystem (26) ohne virtuellen Speicher und einen physischen Speicher (16) enthält, wobei der physische Speicher (16) einen Arbeitsspeicher (28), der geeignet ist, mindestens ein Datenspeichersegment (32) und mindestens ein Datensegment (34) zu enthalten, und einen Festspeicher (30) enthält, der geeignet ist, mindestens ein Dateninitialisierungssegment (36) zu enthalten, wobei das Verfahren für jede Softwarekomponente (38, 42), von denen mindestens eine bei einer Ausführung der Software (24) für einen spezifischen Neustart geeignet ist, die folgenden Schritte enthält:
- einen Kompilierungsschritt (46), der einen Kompilierer verwendet, der geeignet ist, für jede Quelldatei (40, 44) die mit Null initialisierten Variablen (56, 58) einem Datenspeichersegment (32), die initialisierten Variablen (60, 62) einem Datensegment (34) und die spezifischen Werte (64, 66) der initialisierten Variablen einem Dateninitialisierungssegment (36) zuzuweisen, und die Quelldateien (40, 44) in Objektdateien (48, 50) umzuwandeln, und
- einen Schritt der Editierung von Links (68), der einen Link-Editor verwendet, der geeignet ist, die mit Null initialisierten Variablen (56), die initialisierten Variablen (60) und ihre spezifischen Werte (64) in einem jeweiligen Block (70, 72, 74) innerhalb ihres im Kompilierungsschritt (46) zugewiesenen jeweiligen Segments (32, 34, 36) zusammenzufassen, der geeignet ist, eine vorbestimmte Zone (76, 78, 80) des Speichers (16) für jeden Block (70, 72, 74) zuzuteilen, und geeignet ist, die aus dem Kompilierungsschritt (46) stammenden Objektdateien (52) zusammenzufassen, um eine entsprechend der Software (24) ausführbare Datei zu bilden,
**dadurch gekennzeichnet, dass** es außerdem für mindestens eine für einen Neustart geeignete Softwarekomponente (42) enthält:
- einen Schritt der Umbenennung (82) des Datenspeichersegments (32), des Datensegments (34) und des Dateninitialisierungssegments (36), die im Kompilierungsschritt (46) zugewiesen wurden und jeder von diesem Kompilierungsschritt (46) stammenden Objektdatei (50) zugeordnet sind, für die neuzustartende Softwarekomponente (42), und
- einen Schritt der Konfiguration (84) des Link-Editors unter Verwendung von Linkeditionsdirektiven, um einen spezifischen Linkeditionsschritt (86) durchzuführen, der die umbenannten Datenspeicher- (32), Daten- (34), und Dateninitialisierungssegmente (36) für jede Objektdatei (50) der neuzustartenden Softwarekomponente (42) in für die neuzustartende Softwarekomponente (42) spezifischen und gemäß der neuzustartenden Softwarekomponente (42) benannten Zonen aneinandergrenzend zuweist, jeweils im Arbeitsspeicher (28) für die umbenannten Datenspeichersegmente (32) und Datensegmente (34) und im Festspeicher (30) für die umbenannten Dateninitialisierungssegmente (36).

2. Verfahren nach Anspruch 1, wobei die mit Null initialisierten Variablen (56, 58) Variablen sind, die einen vom Betriebssystem (26) festgelegten Wert haben, und wobei die mit spezifischen Werten (64, 66) initialisierten Variablen (60, 62) Variablen sind, deren spezifische Werte vorab von einem Entwickler festgelegt wurden.

3. Verfahren nach Anspruch 1 oder 2, wobei der spezifische Schritt der Link-Editierung (86) die folgenden Schritte enthält:
- einen Schritt, der geeignet ist, eine spezifische Zone (94, 96, 98) des Speichers (16), die sich von der vorbestimmten Zone (76, 78, 80) unterscheidet, für das umbenannte Datenspeichersegment (88), das umbenannte Datensegment (90) und das umbenannte Dateninitialisierungssegment (92) zuzuteilen, und
- einen Schritt, der geeignet ist, Markierungen am Anfang und am Ende jedes umbenannten Segments (88, 90, 92) zu erzeugen, der dazu bestimmt ist, die Stelle der zu initialisierenden Variablen (58, 62) im Speicher (16) bei einem Neustart der für einen Neustart geeigneten Softwarekomponente (42) anzuzeigen.

4. Verfahren nach einem der vorhergehenden Ansprüche, wobei die Softwarekomponente (42) eine Softwarebibliothek ist.

5. Verfahren nach einem der vorhergehenden Ansprüche, wobei der Kompilierer von der Art C/C++ ist.

6. Verfahren nach einem der vorhergehenden Ansprüche, wobei das Endgerät (10) ein Mobiltelefon ist.

7. Endgerät (10), das zur Ausführung einer Software (24) geeignet ist, wobei die Software (24) gemäß dem in einem der Ansprüche 1 bis 5 beschriebenen Verfahren generiert wird.

8. Computerprogrammprodukt, das Anweisungen aufweist, die, wenn sie von einer in ein Endgerät (10) integrierten zentralen Verarbeitungseinheit (12) angewendet werden, das Verfahren nach einem der Ansprüche 1 bis 6 durchführen.

## Claims

1. Method for generating an item of software (24), comprising at least two software components (38, 42), on the basis of source files (40, 44) associated with the software components (38, 42), the source files (40, 44) comprising variables initialized to zero (56, 58) and variables (60, 62) initialized to specific values (64, 66), suitable for being executed on a terminal (10) comprising an operating system (26) without virtual memory and a physical memory (16), the physical memory (16) comprising a random-access memory (28), suitable for containing at least one data storage segment (32) and at least one data segment (34), and a read-only memory (30), suitable for containing at least one data initialization segment (36), the method comprising, for each software component (38, 42), one at least of which is suitable for a specific rebooting during an execution of the item of software (24), the following steps:
- a compilation step (46), using a compiler suitable for allocating, for each source file (40, 44), the variables initialized to zero (56, 58) to a data storage segment (32), the initialized variables (60, 62) to a data segment (34), and the specific values (64, 66) of the initialized variables to a data initialization segment (36), and to transform the source files (40, 44) into object files (48, 50), and
- a step of editing links (68), using a link editor suitable for grouping together the variables initialized to zero (56), the initialized variables (60) and their specific values (64) in a respective block (70, 72, 74) within their respective segment (32, 34, 36) allocated during the compilation step (46), suitable for allotting a predetermined area (76, 78, 80) of the memory (16) for each block (70, 72, 74) and suitable for grouping together the object files (52) arising from the compilation step (46), so as to constitute an executable file corresponding to the item of software (24),
**characterized in that** it comprises, furthermore, for at least one software component (42) suitable for a rebooting:
- a step (82) of renaming the data storage segment (32), the data segment (34) and the data initialization segment (36), allocated during the compilation step (46) and associated with each object file (50) arising from this compilation step (46), for the software component (42) to be rebooted, and
- a step (84) of configuring the link editor by using link editing directives, so as to carry out a specific link editing step (86) which contiguously allocates the renamed data storage segments (32), data segments (34), and data initialization segments (36) for each object file (50) of the software component (42) to be rebooted in areas specific to the software component (42) to be rebooted and which are named in accordance with the software component (42) to be rebooted, respectively in random-access memory (28) for the renamed data storage segments (32) and data segments (34) and in read-only memory (30) for the renamed data initialization segments (36).

2. Method according to Claim 1, in which the variables initialized to zero (56, 58) are variables having a value fixed by the operating system (26), and in that the variables (60, 62) initialized to specific values (64, 66) are variables whose specific values have been fixed previously by a developer.

3. Method according to Claim 1 or 2, in which the specific link editing step (86) comprises the following steps:
- a step suitable for allotting a specific area (94, 96, 98) of the memory (16), different from the predetermined area (76, 78, 80), for the renamed data storage segment (88), the renamed data segment (90) and the renamed data initialization segment (92), and
- a step suitable for creating frames at the start and at the end of each renamed segment (88, 90, 92), which is intended to indicate the location in the memory (16) of the variables to be initialized (58, 62) during a rebooting of the software component (42) suitable for a rebooting.

4. Method according to any one of the preceding claims, in which the software component (42) is a software library.

5. Method according to any one of the preceding claims, in which the compiler is of C/C++ type.

6. Method according to any one of the preceding claims, in which the terminal (10) is a mobile telephone.

7. Terminal (10) suitable for executing an item of software (24), in which the item of software (24) is generated according to the method described according to any one of Claims 1 to 5.

8. Computer program product comprising instructions which, when implemented by a central processing unit (12) integrated into a terminal (10), implements the method according to any one of Claims 1 to 6.
